# EUROPEAN PATENT SPECIFICATION

(11) **EP 2 436 585 B1**
(45) Date of publication and mention of the grant of the patent: **06.04.2016**
(21) Application number: 11182656.6
(22) Date of filing: 26.09.2011
(51) Int. Cl.: B62J 17/02, B62J 17/04, B62J 23/00, B62J 25/00, B62J 29/00

(54) **Small-Sized Vehicle**
Kleines Fahrzeug
Véhicule de petite taille

(30) Priority: 29.09.2010 JP 2010219527
(43) Date of publication of application: 04.04.2012
(73) Proprietor: Honda Motor Co., Ltd., Tokyo 107-8556 (JP)
(72) Inventor: Kodan, Keishi, Saitama, 351-0193 (JP); Petersson, Martin, Saitama, 351-0193 (JP)
(74) Representative: Beder, Jens

(56) References cited:
- WO-A2-98/19904
- FR-A- 1 111 815
- JP-A- 60 107 466
- JP-A- 2004 067 079
- JP-U- H0 361 494
- JP-U- 60 117 292
- JP-U- 61 155 279
- US-A- 3 690 721
- US-A- 4 066 290
- US-A- 4 130 315
- US-A- 4 632 448

## Description

The present invention relates to an improvement in a small-sized vehicle including grip cover portions covering the front sides of handle grips.

### [Background Art]

Of small-sized vehicles such as motorcycles, one that includes grip cover portions covering the front sides of handle grips has been known (see Patent Document 1 (Fig. 1), for example).

As shown in Fig. 1 of Japanese Patent Application Publication No. Hei 8-216952, a motorcycle (2)(the number in parentheses represents a reference numeral described in Patent Document 1; the same applies hereinafter) includes a front cowl (16) provided to a front part of the vehicle to protect the vehicle body; a windscreen (23) provided to an upper portion of the front cowl (16) to protect the driver from travelling wind, flying stones, and the like; and grip covers (20) detachably attachable to the front cowl (16) at positions forward of handle grips (61) of a steering handlebar (6).

Equipped with the grip covers (20), the motorcycle (2) can protect the driver's hands from wind, rain, and obstacles. Here, the larger the grip covers (20), the better the protection function, as a matter of course.

However, the grip covers (20) may be conspicuous if the grip covers (20) are large. As a result, the vehicle body may appear large in its exterior, giving an impression of heaviness and poor driver friendliness.

Note that high driver friendliness is often desired in small-sized vehicles such as motorcycles, and therefore a technique to make the grip covers (20) inconspicuous has been desired. Document 454130315 discloses a small-sized vehicle according to the preamble of claim 1.

An object of the present invention is to provide a small-sized vehicle in which the presence of grip covers is made inconspicuous to achieve high driver friendliness without lowering the quality of the exterior and in which the effect of cross wind can be reduced.

This problem is solved by a small - sized vehicle according to claim 1.

In a second preferred embodiment of the present invention, left and right rearview mirrors are disposed on a rear side of the vehicle relative to the grip cover portions, respectively; and the rearview mirrors are covered with the grip cover portions partially or entirely in the front view of the vehicle.

In a third preferred embodiment of the present invention, a seat on which a driver sits is disposed on a rear side of the vehicle relative to the steering handlebar; a substantially horizontal first step on which the driver puts feet is disposed closer to a front of the vehicle than is the seat; and a second step which rises from a front end of the first step and which the driver is allowed to bring bottoms of the feet of legs in stretched postures into contact with is disposed below the handle grips.

In a fourth preferred embodiment of the present invention, the second step is disposed on a front side of the vehicle relative to the handle grips in a side view of the vehicle.

In a fifth preferred embodiment of the present invention, the grip cover portions are each so inclined as to be closer to a rear of the vehicle toward an outer side in the vehicle width direction.

According to claim 1 the present invention, the grip cover portions respectively covering the handle grips in the front view of the vehicle are formed integrally with the windscreen in such a way as to bulge therefrom outward in the vehicle width direction.

The handle grips are protected from wind, rain, and dust by the grip cover portions formed in part of the windscreen.

The grip cover portions are clear like the windscreen, and therefore their presence is inconspicuous. In addition, the grip cover portions are formed integrally with the windscreen, and therefore their presence is further inconspicuous. That is, according to the present invention, it is possible to provide a small-sized vehicle in which the presence of grip cover portions is made inconspicuous to achieve high driver friendliness without lowering the quality of the exterior.

According to the second preferred embodiment of the present invention, the left and right rearview mirrors are disposed on the rear side of the vehicle relative to the grip cover portions, respectively.

The rearview mirrors are covered with the grip cover portions partially in the front view of the vehicle. Accordingly, the rearview mirrors can be protected.

In addition, since the grip cover portions are clear, the shapes of the rearview mirrors can be recognized when they are viewed from the front of the vehicle, and therefore the designs of the rearview mirrors do not have to be wasted. Accordingly, the whole design can be improved.

According to the third preferred embodiment of the present invention, the second step which rises from the front end of the substantially horizontal first step and which the driver is allowed to bring the bottoms of the feet of the legs in stretched postures into contact with is disposed below the handle grips.

When the driver puts his or her feet on the first step, his or her head may be situated rearward of the handle grips. In this case, the grip cover portion 41L is likely to be within the driver's front sight.

However, since the grip cover portions are clear, their presence is inconspicuous from the driver's side. Accordingly, high driver friendliness can be maintained for the driver.

According to the preferred embodiment apect of the present invention, the second step is disposed on the rear side of the vehicle relative to the handle grips in the side view of the vehicle.

When the driver puts his or her feet on the second step, his or her head may be situated further rearward of the handle grips. In the present invention, however, the grip cover portions are inconspicuous, and therefore high driver friendliness can be maintained for the driver.

According to the fifth preferred embodiment of the present invention, the grip cover portions are each so inclined as to be closer to the rear of the vehicle toward the outer side in the vehicle width direction. Travelling wind flows along the inclination. Therefore, wind hitting the windscreen and the grip cover portions can be caused to flow smoothly outward in the vehicle width direction and rearward. Accordingly, the travelling performance can be improved.

According to claim 1 of the present invention, the grip cover portions are connected to the windscreen respectively via the stair portions having such shapes that the grip cover portions are situated rearward of the surface of the windscreen. The stair portions are provided, and therefore the stiffness of the windscreen can be improved.

In addition, in a case of receiving cross wind, the wind flowing along the grip cover portions and the windscreen can be caused to leave the grip cover portions and the windscreen by the stair portions. Accordingly, influence of cross wind can be reduced.

Fig. 1 is a left-side view of a small-sized vehicle of the present invention.
Fig. 2 is a front view of the small-sized vehicle of the present invention.
Fig. 3 is a cross-sectional view taken along the 3-3 line of Fig. 1.
Fig. 4 is a cross-sectional view taken along the 4-4 line of Fig. 1.

A mode for carrying out the present invention will be described below based on the accompanying drawings. Note that the drawings are to be viewed in a way that the reference numerals are normally read. Moreover, left, right, front, and rear refer to directions based on the driver's view.

An embodiment of the present invention will be described based on the drawings.

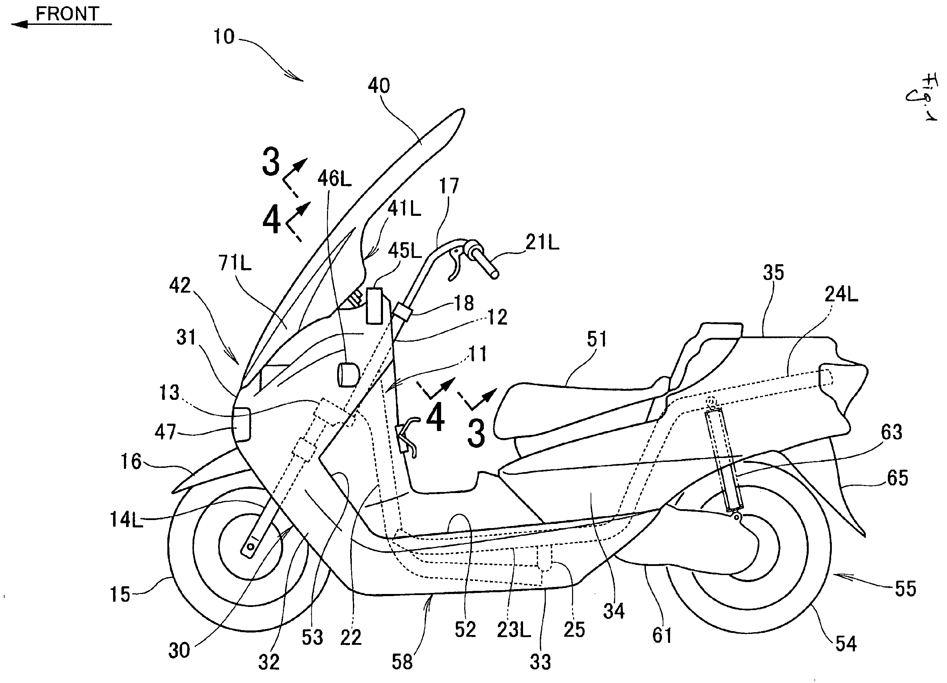

As shown in Fig. 1, a motorcycle 10 as a small-sized vehicle includes: a body frame 11; a head pipe 12 provided at the leading end of the body frame 11; front forks 14L (only the left one is illustrated) steerably attached to the head pipe 12 via a bottom bridge 13 and being extendable and contractible in the longitudinal direction thereof; a front wheel 15 attached rotatably to the lower ends of the front forks 14L; and a front fender 16 attached to the front forks and designed to block dirt and stones splashed and flew by the front wheel 15.

A steering handlebar 17 for steering the front wheel 15 is provided to the head pipe 12 via a top bridge 18. Handle grips 21L (only left one is illustrated) are provided to both end portions of the steering handlebar 17.

The body frame 11 is formed of: the head pipe 12 forming a front end portion thereof; a down frame 22 extending downward from the head pipe 12; a pair of left and right lower frames 23L and 23R (only the lower frame with reference numeral 23L on the near side is illustrated) extending rearward from a middle portion of a lower portion of the down frame 22; a pair of left and right rear frames 24L and 24R (only the rear frame with reference numeral 24L on the near side is illustrated) extending obliquely upward toward the rear from rear portions of the lower frames 23L and 23R, respectively; and a cross pipe 25 laid between the lower frames 23L and 23R and having a middle portion thereof supported by a rear end portion of the down frame 22.

A body cover 30 is formed of: a front cowl 31 for covering a front side of the vehicle; a leg shield 32 below the front cowl 31; a lower cover 33 for covering a lower side of the vehicle; a side cover 34 for covering lateral sides of the vehicle; and a rear cover 35 continuing rearward from the side cover 34. Further, a clear windscreen 40 is provided on a front side of the vehicle relative to the steering handlebar 17. The windscreen 40 is provided with grip cover portions 41L and 41R (only the grip cover portion with reference numeral 41L on the near side is illustrated) for covering the handle grips 21L.

In a side view of the vehicle, the windscreen 40 extends obliquely upward toward the rear from a leading end portion 42 of the vehicle, and rearview mirrors 45L and 45R (only the rear view mirror with reference numeral 45L on the near side is illustrated) are disposed on a rear side of the vehicle relative to the grip cover portion 41L.

Moreover, left and right directional indicators 46L and 46R (only the directional indicator with reference numeral 46L on the near side is illustrated) are disposed below the rearview mirrors 45L and 45R, respectively, and a headlight 47 is disposed in the leading end portion 42 of the vehicle.

A seat 51 on which the driver sits is disposed on a rear side of the vehicle relative to the steering handlebar 17. Substantially horizontal first steps 52 on which the driver respectively puts his or her feet are disposed on a front side of the vehicle relative to the seat 51. There are second steps 53 which rise obliquely upward toward the front of the vehicle from the front ends of the first steps 52, respectively, and which the driver is allowed to bring the bottoms of the feet of his or her stretched legs into contact with. In the side view of the vehicle, the second steps 53 are disposed on a front side of the vehicle relative to the handle grip 21L.

In addition, a rear wheel unit 55 is disposed at a rear part of the vehicle.

The rear wheel unit 55 is formed of: an engine; a power transmission mechanism 61 for transmitting the power of the engine; and a rear wheel 54 driven by the power of the engine.

One end of a rear cushion unit 63 is attached to the rear frames 24L and 24R whereas the other end of the rear cushion unit 63 is attached to the rear wheel unit 55.

Moreover, a rear fender 65 is disposed above the rear wheel 54.

The grip cover portions 41L and 41R in a front view of the vehicle will be described next.

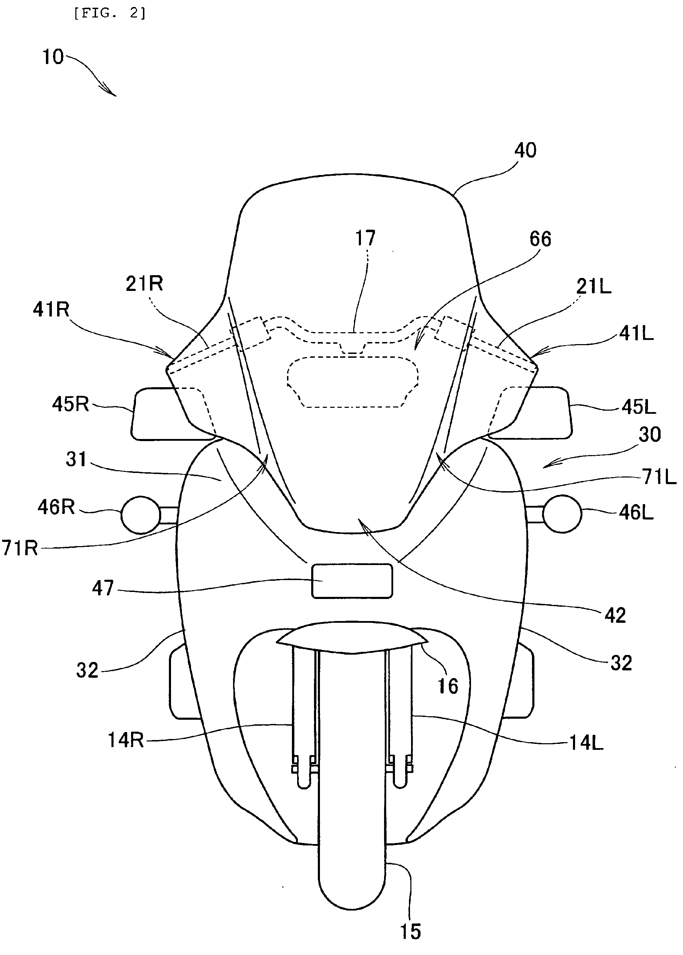

As shown in Fig. 2, the handle grips 21L and 21R are provided to both end portions of the steering handlebar 17 within the windscreen 40 in the front view of the vehicle. The grip cover portions 41L and 41R covering the handle grips 21L and 21R are formed integrally with the windscreen 40 in such a way as to bulge therefrom outward in the vehicle width direction. The outline of the grip cover portion 41L extends to left in the vehicle width direction but slightly upward from the leading end portion 42 of the vehicle; then extends upward but slightly to left in the vehicle width direction; thereafter extends obliquely upward to right in the vehicle width direction; and finally joins the windscreen 40. Note that the outline of the grip cover portion 41R extends in the symmetrically same fashion.

In the front view of the vehicle, the rearview mirror 45L is partially covered with the grip cover portion 41L, and the rearview mirror 45R is partially covered with the grip cover portion 41R. The grip cover portions 41L and 41R are connected to a surface 66 of the windscreen 40 via stair portions 71L and 71R (details described later), respectively.

The grip cover portion 41L and 41R will be described next based on a cross-sectional view thereof.

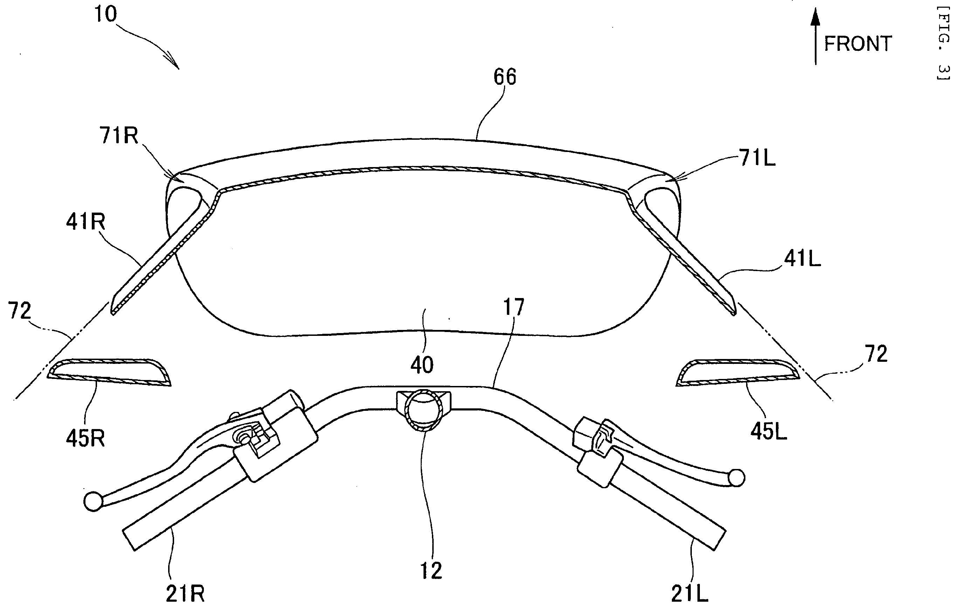

As shown in Fig. 3, the grip cover portion 41L is so inclined as to be closer to the rear of the vehicle toward the outer side in the vehicle width direction. Likewise, the grip cover portion 41R is so inclined as to be closer to the rear of the vehicle toward the outer side in the vehicle width direction. The rearview mirror 45L is disposed behind an extension line 72 of the grip cover portion 41L.

The stair portions 71L and 71R will be described next.

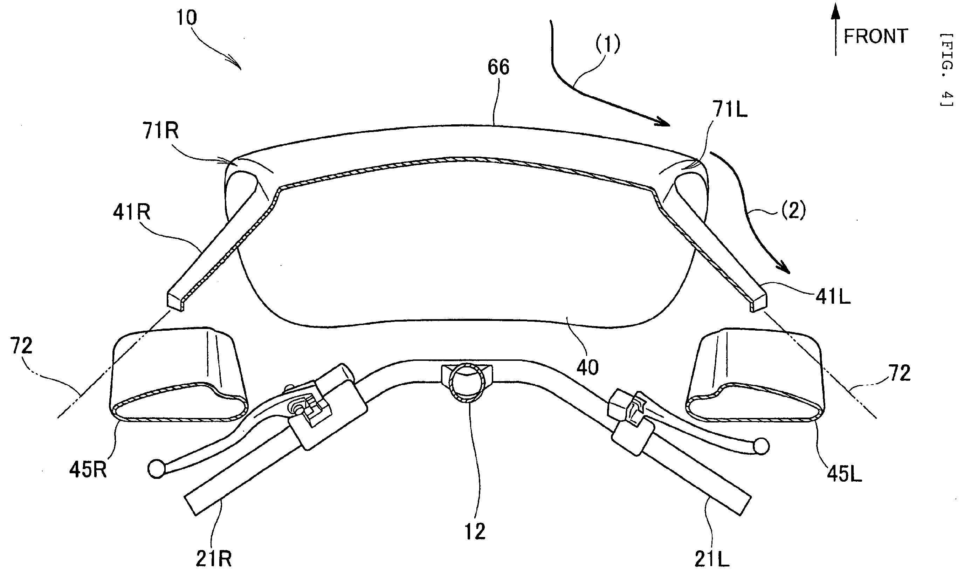

As shown in Fig. 4, the wind screen 40 and the grip cover portion 41L are connected to each other via the stair portion 71L having such a step shape that the grip cover portion 41L is situated rearward of the windscreen surface 66.

Referring back to Fig. 1, the stair portion 71L is so formed as to become narrower in the side view of the vehicle toward an upper side. That is, the grip cover portion 41L is formed in a more upright posture than the windscreen 40. The windscreen 40 is inclined to lean toward the rear of the vehicle to thereby reduce the air resistance during travelling, whereas the grip cover portion 41L is formed in the upright posture to thereby increase the frontal projected area. Note that the stair portion 71R on the grip cover portion 41R side is also formed in the same fashion.

An operation of the above-mentioned small-sized vehicle 10 will be described next.

During travel, travelling wind hits the windscreen 40 and flows along the windscreen surface 66 as indicated by an arrow (1). After leaving the surface 66 from the stair portion 71L to the outer side in the vehicle width direction, the travelling wind flows along the grip cover portion 41L as indicated by an arrow (2). Accordingly, the hand holding the handle grip 21L can be protected from the travelling wind.

Operations and effects of what is mentioned above will be summarized and described below.

According to the configuration shown in Fig. 2 described above, the handle grips 21L and 21R are protected from wind, rain, and dust by the grip cover portions 41L and 41R formed in part of the windscreen 40.

The grip cover portions 41L and 41R are clear like the windscreen 40, and therefore their presence is inconspicuous. In addition, the grip cover portions 41L and 41R are formed integrally with the windscreen 40, and therefore their presence is further inconspicuous. That is, according to the present invention, it is possible to provide a small-sized vehicle in which the presence of the grip cover portions 41L and 41R is made inconspicuous to achieve high driver friendliness without lowering the quality of the exterior.

According to the configuration shown in Fig. 2 described above, the rearview mirrors 45L and 45R are covered with the grip cover portions 41L and 41R partially in the front view of the vehicle. Accordingly, the rearview mirrors 45L and 45R can be protected.

In addition, since the grip cover portions 41L and 41R are clear, the shapes of the rearview mirrors 45L and 45R can be recognized when they are viewed from the front of the vehicle, and therefore the designs of the rearview mirrors 45L and 45R do not have to be wasted. Accordingly, the whole design can be improved.

According to the configuration shown in Fig. 1, when the driver puts his or her feet on the first steps 52, his or her head may be situated rearward of the handle grip 21L. In this case, the grip cover portion 41L is likely to be within the driver's front sight.

However, since the grip cover portion 41L is clear, its presence is inconspicuous from the driver's side. Accordingly, high driver friendliness can be maintained for the driver.

According to the configuration shown in Fig. 1, when the driver puts his or her feet on the second steps 53, his or her head may be situated further rearward. In the present invention, however, the grip cover portion 41L is inconspicuous, and therefore high driver friendliness can be maintained for the driver.

According to the configuration shown in Fig. 3, travelling wind flows along the aforementioned inclinations. Therefore, wind hitting the windscreen 40 and the grip cover portions 41L and 41R can be caused to flow smoothly outward in the vehicle width direction and rearward. Accordingly, the travelling performance can be improved.

According to the configuration shown in Fig. 4, the stair portions 71L and 71R are provided, and therefore the stiffness of the windscreen 40 can be improved. In addition, in a case of receiving cross wind, the wind flowing along the grip cover portions 41L and 41R and the windscreen 40 can be caused to leave the grip cover portions 41L and 41R and the windscreen 40 by the stair portions. Accordingly, influence of cross wind can be reduced.

Note that the small-sized vehicle 10 of the present invention is applied to the motorcycle 10 but is not limited thereto. The small-sized vehicle 10 of the present invention may as well be applied to other types of vehicles as long as they are vehicles including grip cover portions covering the front sides of handle grips, such as a swingable motor tricycle.

The small-sized vehicle of the present invention is suitable for a small-sized vehicle including grip cover portions covering the front sides of handle grips.

- 10: SMALL-SIZED VEHICLE (MOTORCYCLE)
- 17: STEERING HANDLEBAR
- 21L, 21R: HANDLE GRIP
- 40: WINDSCREEN
- 41L, 41R: GRIP COVER PORTION
- 45L, 45R: REARVIEW MIRROR
- 51: SEAT
- 52: FIRST STEP
- 53: SECOND STEP
- 66: WINDSCREEN SURFACE
- 71L, 71R: STAIR PORTION

## Claims

1. A small-sized vehicle (10) comprising a clear windscreen (40) on a front side of the vehicle relative to a steering handlebar (17), wherein
clear grip cover portions (41L, 41R) respectively covering handle grips (21L, 21R) in a front view of the vehicle are formed integrally with the windscreen (40) in such a way as to bulge therefrom outward in a vehicle width direction, the handle grips (21L, 21R) being provided to both end portions of the steering handlebar (17), respectively,
**characterized in that**
the grip cover portions (41L, 41R) are connected to the windscreen (40) respectively via stair portions (71L, 71R) having such shapes that the grip cover portions (41L, 41R) are situated rearward of a surface (66) of the windscreen (40).

2. The small-sized vehicle according to claim 1, wherein
left and right rearview mirrors (45L, 45R) are disposed on a rear side of the vehicle relative to the grip cover portions (41L, 41R), respectively, and
the rearview mirrors (45L, 45R) are covered with the grip cover portions (41L, 41R) partially or entirely in the front view of the vehicle.

3. The small-sized vehicle according to any one of claims 1 and 2, wherein
a seat (51) on which a driver sits is disposed on a rear side of the vehicle relative to the steering handlebar (17),
a substantially horizontal first step (52) on which the driver puts feet is disposed closer to a front of the vehicle than is the seat (51), and
a second step (53) which rises from a front end of the first step (52) and which the driver is allowed to bring bottoms of the feet of legs in stretched postures into contact with is disposed below the handle grips (21 L, 21 R).

4. The small-sized vehicle according to claim 3, wherein the second step (53) is disposed on a front side of the vehicle relative to the handle grips (21 L, 21 R) in a side view of the vehicle.

5. The small-sized vehicle according to any one of claims 1 to 4, wherein the grip cover portions (41L, 41R) are each so inclined as to be closer to a rear of the vehicle toward an

6. The small-sized vehicle according to any of claims 1 to 5, wherein the stair portions (71 L, 71 R) are so formed as to become narrower in the side view of the vehicle toward an upper side in such a way that the grip cover portions (41 L, 41 R) are formed in a more upright posture than the windscreen (40), respectively.

## Patentansprüche

1. Kleines Fahrzeug (10), das eine durchsichtige Windschutzscheibe (40) auf einer Vorderseite des Fahrzeugs relativ zu einer Lenkstange (17) aufweist, wobei durchsichtige Griffabdeckabschnitte (41L, 41R), die in der Vorderansicht des Fahrzeugs jeweils Lenkergriffe (21L, 21R) bedecken, integral mit der Windschutzscheibe (40) in einer derartigen Weise ausgebildet sind, dass sie sich in einer Fahrzeugbreitenrichtung davon nach außen wölben, wobei die Lenkergriffe (21L, 21R) jeweils auf beiden Endabschnitten der Steuerlenkstange (17) bereitgestellt sind,
**dadurch gekennzeichnet, dass**
die Griffabdeckabschnitte (41L, 41R) jeweils über Stufenabschnitte (71L, 71R) mit derartigen Formen, dass die Griffabdeckabschnitte (41L, 41R) hinter einer Oberfläche (66) der Windschutzscheibe (40) gelegen sind, mit der Windschutzscheibe (40) verbunden sind.

2. Kleines Fahrzeug nach Anspruch 1, wobei
linke und rechte Rückspiegel (45L, 45R) jeweils relativ zu den Griffabdeckabschnitten (41L, 41R) auf einer Rückseite des Fahrzeugs angeordnet sind, und
die Rückspiegel (45L, 45R) in der Vorderansicht des Fahrzeugs von den Griffabdeckabschnitten (41L, 41R) teilweise oder vollkommen bedeckt sind.

3. Kleines Fahrzeug nach einem der Ansprüche 1 und 2, wobei
ein Sitz (51), auf dem ein Fahrer sitzt, relativ zu der Steuerlenkstange (17) auf einer Rückseite des Fahrzeugs angeordnet ist, und
eine im Wesentlichen horizontale erste Stufe (52), auf die der Fahrer seine Füße stellt, näher an einer Vorderseite des Fahrzeugs ist als der Sitz (51), und
eine zweite Stufe (53), die von einem vorderen Ende der ersten Stufe (52) ansteigt, unterhalb der Lenkergriffe (21L, 21R) angeordnet ist, wobei dem Fahrer erlaubt wird, die Unterseiten der Beine in gestreckter Haltung in Kontakt mit ihr zu bringen.

4. Kleines Fahrzeug nach Anspruch 3, wobei die zweite Stufe (53) relativ zu den Lenkergriffen (21L, 21R) in einer Seitenansicht des Fahrzeugs auf einer Vorderseite des Fahrzeugs angeordnet ist.

5. Kleines Fahrzeug nach einem der Ansprüche 1 bis 4, wobei die Griffabdeckabschnitte (41L, 41R) jeweils derart geneigt sind, dass sie in Richtung einer Außenseite in der Fahrzeugbreitenrichtung näher an einer Rückseite des Fahrzeugs sind.

6. Kleines Fahrzeug nach einem der Ansprüche 1 bis 5, wobei die Stufenabschnitte (71L, 71R) derart ausgebildet sind, dass sie in der Seitenansicht des Fahrzeugs in Richtung einer Oberseite in einer derartigen Weise schmaler werden, dass die Griffabdeckabschnitte (41L, 41R) jeweils in einer aufrechteren Haltung als die Windschutzscheibe (40) ausgebildet sind.

## Revendications

1. Véhicule de petite taille (10) comprenant un pare-brise transparent (40) sur un côté avant du véhicule relativement à un guidon de direction (17), dans lequel
des portions couvertures de poignée transparentes (41L, 41R) couvrant respectivement des poignées de guidon (21L, 21R) dans une vue avant du véhicule sont formées de façon monobloc avec le pare-brise (40) de manière telle à ressortir de celui-ci vers l'extérieur dans une direction de largeur de véhicule, les poignées de guidon (21L, 21R) étant prévues sur les deux portions d'extrémité du guidon de direction (17), respectivement,
**caractérisé en ce que**
les portions couvertures de poignée (41L, 41R) sont raccordées au pare-brise (40) respectivement par l'intermédiaire de portions à degré (71L, 71R) présentant des formes telles que les portions couvertures de poignée (41L, 41R) soient situées vers l'arrière d'une surface (66) du pare-brise (40).

2. Véhicule de petite taille selon la revendication 1, dans lequel
des miroirs rétroviseur gauche et droit (45L, 45R) sont disposés sur un côté arrière du véhicule relativement aux portions couvertures de poignée (41L, 41R), respectivement, et
les miroirs rétroviseurs (45L, 45R) sont couverts avec les portions couvertures de poignée (41L, 41R) partiellement ou entièrement en vue avant du véhicule.

3. Véhicule de petite taille selon l'une quelconque des revendications 1 et 2, dans lequel
un siège (51) sur lequel un conducteur s'assoit est disposé sur un côté arrière du véhicule relativement au guidon de direction (17),
un premier marchepied sensiblement horizontal (52) sur lequel le conducteur place les pieds est disposé plus près d'un avant du véhicule que le siège (51), et
un second marchepied (53) qui s'élève à partir d'une extrémité avant du premier marchepied (52) et avec lequel le conducteur peut mettre en contact des parties inférieures des pieds des jambes en positions étirées est disposé sous la poignée de guidon (21L, 21R).

4. Véhicule de petite taille selon la revendication 3, dans lequel le second marchepied (53) est disposé sur un côté avant du véhicule relativement à la poignée de guidon (21L, 21R) en vue latérale du véhicule.

5. Véhicule de petite taille selon l'une quelconque des revendications 1 à 4, dans lequel les portions couvertures de poignée (41L, 41R) sont chacune inclinées afin d'être plus près d'un arrière du véhicule vers un côté extérieur dans la direction de largeur de véhicule.

6. Véhicule de petite taille selon l'une quelconque des revendications 1 à 5, dans lequel les portions à degré (71L, 71R) sont formées afin de devenir plus étroites en vue latérale du véhicule vers un côté supérieur de manière telle que les portions couvertures de poignée (41L, 41R) soient formées dans une position plus verticale que le pare-brise (40), respectivement.
